# EUROPEAN PATENT SPECIFICATION

(11) **EP 3 283 738 B1**
(45) Date of publication and mention of the grant of the patent: **05.06.2019**
(21) Application number: 16726675.8
(22) Date of filing: 15.04.2016
(51) Int. Cl.: F01L 9/02

(54) **ACTUATOR FOR AXIAL DISPLACEMENT OF AN OBJECT**
ANTRIEB FÜR AXIALVERSCHIEBUNG EINES OBJEKT
ACTIONNEUR POUR DÉPLACEMENT AXIAL D'UN OBJET

(30) Priority: 16.04.2015 SE 1550461
(43) Date of publication of application: 21.02.2018
(73) Proprietor: Freevalve AB, 262 74 Ängelholm (SE)
(72) Inventor: HÖGLUND, Anders, 266 32 Munka Ljungby (SE); CARLSON, Urban, 252 76 Helsingborg (SE)
(74) Representative: Brann AB
(86) International application number: PCT/SE2016/050326
(87) International publication number: WO 2016/167715

(56) References cited:
- WO-A1-03/102386
- WO-A1-2015/005856
- US-A- 3 727 595

## Description

### Technical field of the Invention

The present invention relates to an actuator for axial displacement of an object. The present invention is specifically useful in applications having high demands for high speeds and precise controllability of the axial displaceability. The present invention relates specifically to a gas exchange valve actuator for internal combustion engines, in which the actuator is suggested to be used for driving one or more inlet valves or outlet valve controlling the supply and evacuation, respectively, of air relative to the cylinders of the internal combustion engine. Thus, the inventive actuator is especially suitable for driving engine valves and thereby eliminates the need for one or more cam shafts in the internal combustion engine.

The inventive actuator comprises an actuator piston disc and a cylinder volume, the actuator piston disc separating said cylinder volume in a first portion and a second portion and is in axial direction displaceable back and forth in said cylinder volume between an inactive position and an active position. The actuator further comprises an inlet channel extending between a pressure fluid inlet and the first portion of the cylinder volume, a first inlet valve body arranged in said inlet channel, an outlet channel extending between the first portion of the cylinder volume and a pressure fluid outlet, and an outlet valve body arranged in said outlet channel.

### Background of the Invention and Prior Art

Thus, an actuator, commonly known as a pneumatic actuator, comprises an actuator piston disc that is displaceable in axial direction between a first position (inactive position) and a second position (active/extended position). The displacement is achieved by controlling a supply of pressure fluid, such as pressurized gas/air, that acts on and drives the actuator piston disc. The actuator piston disc acts in its turn directly or indirectly on the object that is to be displaced, for example an engine valve, for controlling its position.

In the application having an engine valve, when the actuator piston disc is in the inactive position the engine valve is in contact with its seat, and when the actuator piston disc is in the active position the engine valve is open, i.e. located at a distance from its seat.

In known actuators the inlet valve body is as a rule constituted by a slide valve body that is driven by an electro magnet. In for instance US 8,973,541 it is disclosed that a first inlet valve and an outlet valve are connected to each other and constitute part of one and the same slide valve body, wherein the slide valve body is either driven directly by the electro member or the electro member controls the slide valve body indirectly via an unspecified and indefinite "pilot-slave" arrangement, which is not at all described in said document. However, it is plausible that such a "pilot-slave-arrangement" embrace that the electro member displaces a "pilot" that indirectly drive the slide valve body being a "slave" by the electro member/pilot controls the supply of a pressure fluid acting on and displaces the slide valve body, as is shown in for instance US 3,727,595.

One drawback of the disclosed design having the first inlet valve and the second inlet valve combined in one and the same slide valve body, is that the slide valve body has great mass that counteract fast acceleration in connection with the actuator is given instruction regarding change of operational condition, from inactive to active. In other words the change over time from closed inlet channel to fully open inlet channel is unnecessarily long, and the initial movement of the slide valve body when the inlet channel is to be opened is the slowest which is the opposite to the wanted. Thereto, a so-called draught will occur when the seat valve body is in motion from the first position to the second position. Draught entail that the inlet is open at the same time as the outlet is still open, leading to the pressure fluid passing straight through the actuator without performing any useful work. The only way to prevent draught in the disclosed design, in which a common slide valve body is used, is to not open the inlet channel when the slide valve body starts to move until after the outlet channel has been closed, that entail unnecessary long displacement of the slide valve body which takes time and consumes unnecessary amounts of pressure fluid.

The greatest problem is that it always takes place a certain leakage of pressure fluid past the slide valve body which also entails increased consumption of pressure fluid performing no useful work. All consumption of pressure fluid is directly connected to the energy consumption of the actuator and thereby it is central to keep the consumption to a minimum.

Document WO 2015/005856 A1 discloses an actuator for axial displacement of an object according to the preamble of claim 1.

### Object of the Invention

The present invention aims at obviating the above-mentioned drawbacks and shortcomings of previously known actuators for axial displacement of an object and to provide an improved actuator. A basic object of the invention is to provide an improved actuator of the initially defined type that decrease the change over time from closed to fully open inlet channel as well as reducing the consumption of pressure fluid.

Another object of the present invention is to provide an actuator that entirely eliminates leakage of pressure fluid when the actuator is in the inactive state.

### Brief description of the invention

According to the invention at least the basic object is achieved by way of initially defined actuator, which has the features defined in the independent claim. Preferred embodiments of the present invention are further defined in the dependent claims.

According to a first aspect of the present invention an actuator of the initially defined type is provided, which is characterized in that the actuator comprises a slave piston that is displaceable back and forth in a bore between an inactive position and an active position, and in that the first inlet valve body is constituted by a seat valve body having an inactive position at which the inlet channel is closed, the slave piston being configured to during its movement from the inactive position to the active position ram said first inlet valve body and displace it to an active position at which the inlet channel is open, the outlet valve body being connected to and jointly displaceable with the slave piston.

Thus, the present invention is based on the insight that when the actuator is given instruction regarding change of operational state from an inactive state to an active state, in order to displace an object, a slave piston is used to ram the first inlet valve body. Thus, the slave piston is put in motion and has a considerable velocity when it hits/ram the first inlet valve body, which immediately will be displaced from its inactive position (closed position) to its fully open active position. This entails that when the object, which the actuator is configured to displace, is about to accelerate from stand still the inlet channel is immediately fully open and maximal pressure fluid flow may flow into the first portion of the cylinder volume during the entire displacement of the actuator piston disc in the cylinder volume.

By using a seat valve body as the first inlet valve body it is secured that no leakage of pressure fluid takes place when the actuator is in the inactive state, i.e. when the first inlet valve body is closed.

According to a preferred embodiment of the present invention, the actuator comprises a second inlet valve body arranged in said inlet channel, the second inlet valve body being rigidly connected to the actuator piston disc and jointly displaceable with the actuator piston disc between an inactive position and an active position. The second inlet valve body is configured to close the inlet channel when the actuator piston disc is located at least at a predetermined distance from its inactive position, i.e. a direct correlation between the pressure pulse length and the displacement of the actuator piston disc/object is obtained.

According to a preferred embodiment the actuator further comprises an electrically controlled pilot valve configured to communicate a control pressure to the slave piston via a control pressure channel, the pilot valve being configured to place itself in a resting state, in which the control pressure channel is in fluid communication with a control fluid outlet of the pilot valve, and in an active state, in which the control pressure channel is in fluid communication with the control fluid inlet, respectively.

Further advantages of and features of the invention are evident from the other dependent claims and from the following detailed description of preferred embodiments.

### Brief description of the drawings

A more complete understanding of the abovementioned and other features and advantages of the present invention will be evident from the following detailed description of preferred embodiments with reference to the enclosed drawings, in which:
- Fig. 1: is a schematic illustration of an actuator according to an embodiment not being part of the invention, where the actuator is in an inactive state,
- Fig. 2: is a schematic illustration of the actuator according to figure 1, where the actuator is in an active state,
- Fig. 3: is a schematic illustration of an inventive actuator according to a first embodiment,
- Fig. 4: is a schematic illustration of an inventive actuator according to another embodiment not being part of the invention, and
- Fig. 5: is a schematic illustration of an inventive actuator according to a second embodiment.

### Detailed description of preferred embodiments

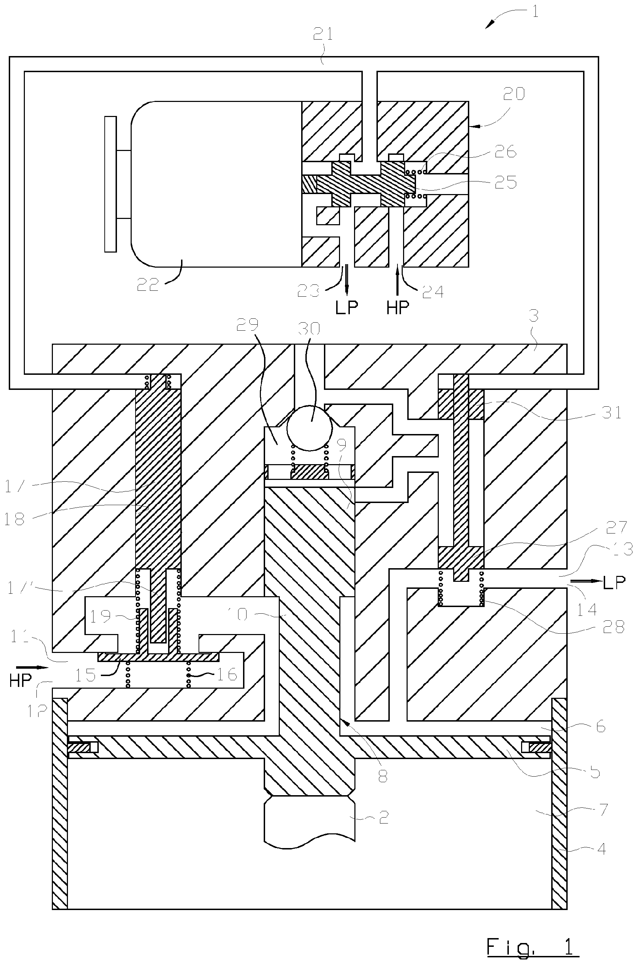

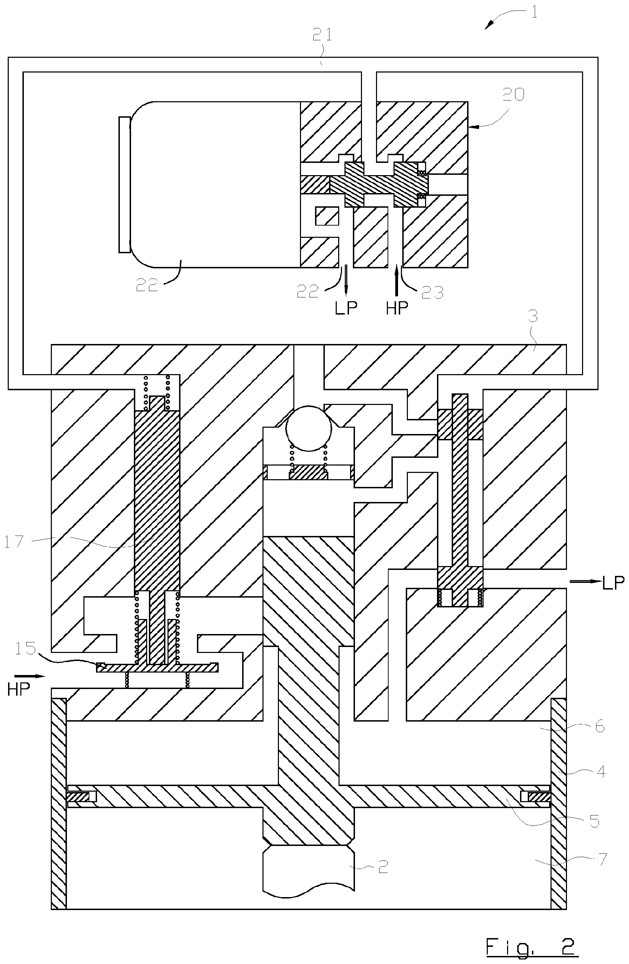

Reference is initially made to the figures 1 and 2, which disclose an embodiment of the actuator not being part of the invention, as well as disclosing the basic idea separated from other members. The present embodiment relates to an actuator, generally designated 1, for axial displacement of an object, such as an actuator 1 for axial displacement of a gas exchange valve 2 of an internal combustion engine. Herein below the embodiment will be described in an exemplifying purpose with reference to an application in which the actuator 1 is used for driving one or more inlet valves or outlet valves 2 in an internal combustion engine.

In the shown embodiment, the actuator 1 comprises an actuator housing 3, a cylinder 4 delimiting a cylinder volume or chamber, an actuator piston disc 5 that is arranged in and that in axial direction is displaceable back and forth in said cylinder volume between an inactive resting position (figure 1) and an active position/lower dead centre (figure 2). The actuator piston disc 5 separates said cylinder volume in a first upper portion 6 and a second lower portion 7. The valve shaft of the gas exchange valve 2 ends in the second portion 7 of the cylinder volume, and the gas exchange valve 2 is biased in a direction upward by means of a conventional valve spring or gas spring (not shown). The actuator piston disc 5 returns to its inactive position by being biased, preferably by way of spring means, in a direction upwards in the figures. The spring means may be a mechanical spring or gas spring located in the second portion 7 of the cylinder volume. In the event the actuator piston is connected to and drives an inlet or outlet valve of an internal combustion engine the spring may be constituted by a valve spring that lifts the gas exchange valve to its closed position. However, alternative solutions to realize the biasing are conceivable.

The actuator 1 further comprises an actuator piston rod, generally denoted 8, which is rigidly connected to and axially extending from the actuator piston disc 5, and which together with the actuator piston disc forms an actuator piston. The actuator piston rod 8 eliminates the risk for a skew setting of the actuator piston disc 5. The actuator piston rod 8 has in the shown embodiment a first thicker portion 9, which is located at a distance from the actuator piston disc 5 and is in a tight fit with a bore in the actuator housing 3, and a second thinner portion 10 extending between and connecting the thicker portion 9 and the actuator piston disc 5. In this embodiment, the thicker portion 9 constitutes a second inlet valve body that will be described herein below.

The actuator 1 also comprises a pressure fluid circuit, preferably a pneumatic, configured for a controllable supply of a gas or gas mixture, for example air, to the first portion 6 of the cylinder volume to generate a displacement of the actuator piston disc 5 from the inactive position to the active position, and configured for controllable evacuation of the gas or gas mixture from the first portion 6 of the cylinder volume to generate a return movement of the actuator piston disc 5 from the active position to the inactive position.

The pressure fluid circuit comprises an inlet channel 11 extending between a pressure fluid inlet 12 in the actuator housing 3 and the first portion 6 of the cylinder volume, and an outlet channel 13 extending between the first portion 6 of the cylinder volume and a pressure fluid outlet 14 in the actuator housing 3. Said inlet channel 11 is via the pressure fluid inlet 12 connected to a pressure fluid source (HP), and said outlet channel 13 is via the pressure fluid outlet 14 connected to a pressure fluid sink (LP). In other words the pressure fluid inlet 12 of the actuator 1 is configured to be connected to the pressure fluid source (HP), and the pressure fluid outlet 14 is configured to be connected to the pressure fluid sink (LP). The pressure fluid source may be a compressor that belongs to the internal combustion engine and with or without a belonging tank, or only a pressure tank. The pressure fluid sink may be any point with a lower pressure than the one generated in the pressure fluid source, for example a conduit leading back to the compressor. The pressure fluid circuit is preferably a closed system with a raised return pressure, i.e. the pressure fluid sink (LP) has for example a pressure of 4-6 Bar, and the pressure fluid source has for example a pressure of 15-25 Bar.

The actuator 1 comprises a first inlet valve body 15 arranged in said inlet channel 11 for controlling the flow of pressure fluid in the inlet channel 11 past the position where the first inlet valve body 15 is situated, i.e. arranged to open and close, respectively, the inlet channel 11. Thus, the inlet channel 11 is closed when the first inlet valve body 15 is located in its inactive position and opened when the first inlet valve body 15 is located in its active position. It is essential for the present invention that the first inlet valve body 15 is constituted by a seat valve body, thereby a geometrically well defined inactive position for the inlet valve body 15 is obtained as well as the inlet channel 11 being free from leakage past the first inlet valve body 15 when it is located in its inactive position. The inlet valve body 15 is preferably biased by way of a spring 16 in one the inlet channel 11 closing direction.

The actuator comprises a slave piston 17 that is displaceable back and forth in a bore 18 in the actuator housing 3 between an inactive position and an active position, the slave piston 17 being configured to during its movement from the inactive position to the active position ram the first inlet valve body 15 and displace it to its active position where the inlet channel 11 is open. The term ram is meant that the slave piston 17 is in movement when it hits the inlet valve body 15 that is standing still and that is thereby put in movement. After the ramming the slave piston 17 drives the inlet valve body 15 to and keeps it in its active position. Directly after the slave piston 17 has struck open/rammed the inlet valve body 15 it is preferred that the inlet valve body 15 obtains a higher velocity than the slave piston 17 and thereby a faster opening of the inlet channel 11 is obtained. The slave piston 17 then hunts down the first inlet valve body 15. A spring 19 is located between the slave piston 17 and the first inlet valve body 15, whereupon the inlet valve body 15 contribute to return and keep the slave piston 17 in its inactive position when the inlet valve body 15 closes the inlet channel 11. Thereto, also pressure fluid located in the inlet channel 11 acts to return the slave piston 17 when the inlet valve body 15 closes.

Preferably the end of the slave piston 17 that is configured to ram the first inlet valve body 15 comprises an axially extending pin 17', that is arranged in telescopic relation relative to a sleeve/recess 15' of the first inlet valve body 15. It shall be pointed out that the inverted relationship may occur, i.e. that the slave piston 17 comprises a sleeve or recess and the first inlet valve body 15 comprises a pin. This design entails elimination of the risk of skew setting of the first inlet valve body 15.

In the disclosed embodiment, the actuator comprises an electrically controlled pilot valve 20, also known as multi-way valve, which is configured to communicate a control pressure to the slave piston 17 via a control pressure channel 21. By electrically controlled means controlled by way of an electro magnetic device, such as a solenoid 22, by way of a piezo electric device, etc. Thus, the control pressure channel 21 extends from the pilot valve 20 to the end of the slave piston 17 that is opposite the end of the slave piston 17 configured to ram the inlet valve body 15. The pilot valve 20 is configured to take an inactive state (figure 1), in which the control pressure channel 21 is in fluid communication with a control fluid outlet 23 of the pilot valve 20, and an active state (figure 2), in which the control pressure channel 21 is in fluid communication with a control fluid inlet 24. The control fluid inlet 24 of the pilot valve 20 is configured to be connected to a pressure fluid source (HP), and the control fluid outlet 23 of the pilot valve 20 is configured to be connected to a pressure fluid sink (LP).

It shall be pointed out that in all drawings the pilot valve 20 is drawn located outside the actuator housing 3, which is fully conceivable, still it is preferable that the pilot valve 20 as well as the control pressure channel 21 are located fully or partly within the actuator housing 3.

In a preferred embodiment, the pilot valve 20 comprises a pilot valve body arrangement 25, which is displaceable back and forth between an inactive position and an active position, whereby the pilot valve body arrangement 25 is biased by way of a spring 26 in a direction toward its inactive position. The solenoid 22 is configured to displace the pilot valve body arrangement 25 in the direction toward its active position when said solenoid 22 is activated. The activation of the solenoid 22 takes place due to a change of state instruction from a control unit of the engine, i.e. an instruction to open the engine valve 2, that in its turn for instance is initiated based on the position of the crank shaft.

The actuator 1 preferably comprises a second inlet valve body that is arranged in said inlet channel 11, and that in the disclosed embodiment is constituted by the thicker portion 9 of the actuator piston rod 8, i.e. the second inlet valve body 9 is rigidly connected to the actuator piston disc 5 and jointly displaceable with the actuator piston disc 5 between an inactive position and an active position, and is arranged to open and close, respectively, the inlet channel 11. The second inlet valve body is configured to admit fluid flow in the inlet channel 11 when the second inlet valve body is located in its inactive position. The second inlet valve body is configured to keep the inlet channel 11 closed when the actuator piston disc 5 is located at least at a predetermined distance from its inactive position.

According to the disclosed embodiment, the first inlet valve body 15 and the second inlet valve body 9 are arranged in series with each other, and preferably the second inlet valve body 9 is arranged between the first inlet valve body 15 and the first portion 6 of the cylinder volume, since the first inlet valve body 15 provides a better sealing than the second inlet valve body 9, that is constituted by a slide valve body.

The actuator 1 also comprises an outlet valve body 27 arranged in said outlet channel 13 for controlling the flow of pressure fluid in the outlet channel 13 past the position where the outlet valve body 27 is located, i.e. arranged to open and close, respectively, the outlet channel 13. The outlet valve body 27 is in the first embodiment constituted by a slide valve body. The outlet valve body 27 is biased by way of a spring 28 in direction towards its inactive position, in which the outlet channel 13 is open. According to this embodiment the pilot valve 29 is configured to communicate said control pressure to the outlet valve body 27 via said control pressure channel 21. Thus, the control pressure channel 21 extends from the pilot valve 20 to the end of the outlet valve body 27 that is opposite the end of the outlet valve bod 27 against which the spring 28 acts. Thus, the outlet valve body 27 is separated from the slave piston 17 in the first embodiment according to figures 1 and 2. Upon activation of the pilot valve 20, the outlet valve body 27 will entirely or to a great extent close the outlet channel 13 before the slave piston 17 ram and open the first inlet valve body 15. Thereby draught and unnecessary consumption of pressure fluid are prevented.

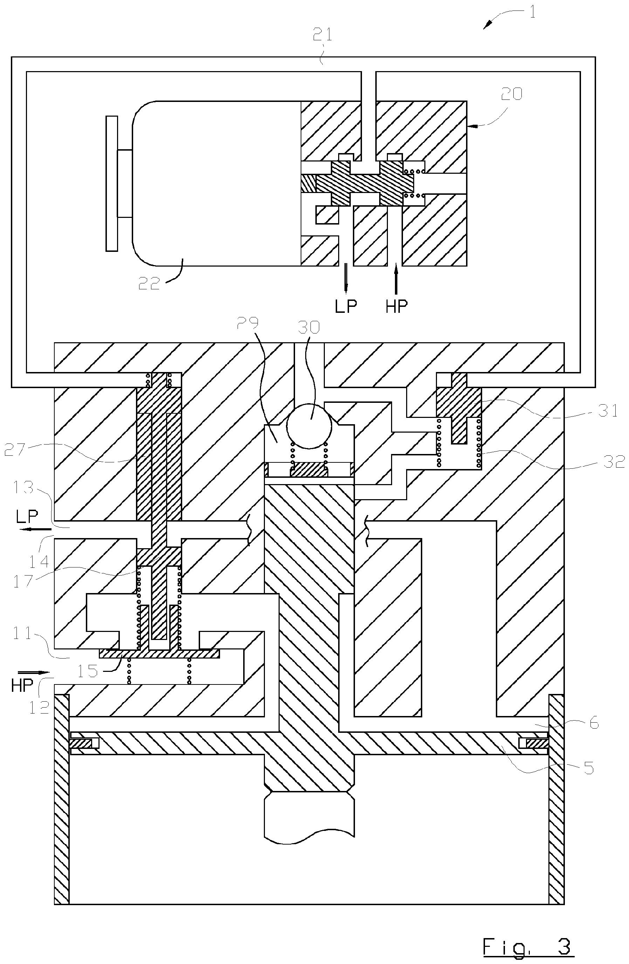

Reference is now made to figure 3 disclosing a first embodiment of the inventive actuator 1. Only differences in relation to the other embodiments will be described.

In the first embodiment the outlet valve body 27 is connected to and jointly displaceable with the slave piston 17. This entails that the outlet channel 13 will be entirely or to great extent closed by the outlet valve body 27 before the inlet channel 11 is opened by the first inlet valve body 15. Thereby draught and unnecessary consumption of pressure fluid are prevented. When the outlet valve body 27 is connected to the slave piston 17 no separate spring is needed to bias the outlet valve body 27 towards its inactive position.

The actuator 1 comprises preferably a hydraulic circuit comprising a locking volume 29, a non-return valve 30 and a hydraulic valve, the actuator piston rod 8 being arranged to be displaced in an axial direction relative to said locking volume 29 in connection with axial displacement of the actuator piston disc 5 in the cylinder volume. Liquid (oil) is allowed to flow into the liquid filled locking volume 29 via the non-return valve 30 and out from the locking volume 29 via the hydraulic valve. The hydraulic valve comprises a hydraulic valve body 31, which is displaceable back and forth between an inactive position, in which the locking volume 29 is open, and an active position, in which the locking volume 29 is closed, the hydraulic valve body 31 in the disclosed embodiment being biased by means of a spring 32 in the direction towards its inactive position. In other words, when the actuator piston is displaced from the inactive position (figure 1) to the active position (figure 2) the actuator piston rod 8 leaves space for inflow of liquid into the locking volume 29 and the hydraulic valve is closed, and when the actuator rod is displaced from the active position to the inactive position the hydraulic valve must first be opened whereupon the liquid is pressed out from the locking volume 29.

According to the first embodiment the pilot valve 20 is configured to communicate said control pressure to the hydraulic valve body 31 via said control pressure channel 21. Thus, the control pressure channel 21 extends from the pilot valve 20 to the end of the hydraulic valve body 31 that is opposite the end of the hydraulic valve body 31 against which the spring 32 acts. Thus, the hydraulic valve body 31 is separated from the slave piston 17 in the first embodiment, according to figure 3. It shall be pointed out that in the embodiment not being part of the invention, according to figures 1 and 2, the hydraulic valve body 31 is connected to and jointly displaceable with the outlet valve body 27. When the hydraulic valve body 31 is connected to the outlet valve body 27 in the embodiment not being part of the invention no separate spring is needed to bias the hydraulic valve body 31 towards its inactive position.

It shall be pointed out that the outlet valve body 27 and the hydraulic valve body 31, respectively, have the same functions irrespective of location.

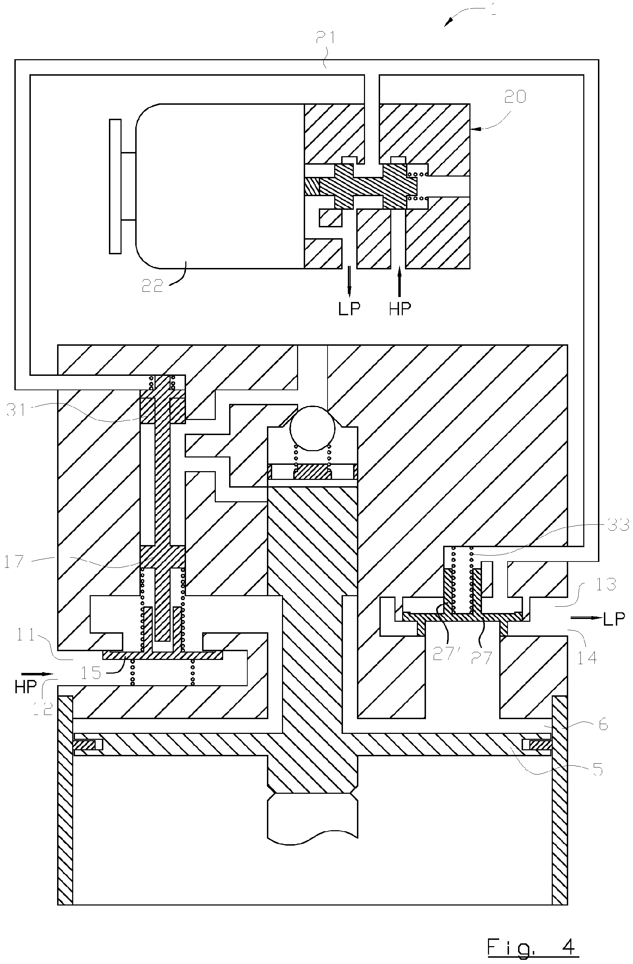

Reference is now made to figure 4 disclosing an other embodiment of the actuator 1 not being part of the invention. Only differences in relation to the other embodiments will be described.

In the other embodiment not being part of the invention the outlet valve body 27 is separated from the slave piston 17, and the hydraulic valve body 31 is connected to and jointly displaceable with the slave piston 17. When the hydraulic valve body 31 is connected to the slave piston 17 no separate springs are needed to bias the hydraulic valve body 31 towards its inactive position. The outlet valve body 27 is in this embodiment constituted by a seat valve body that preferably is biased by means of a spring 33 in one the outlet channel 13 closing direction. The outlet valve body 27 comprises preferably a guide pin 27' for eliminating the risk of skew setting thereof. As in the first embodiment the pilot valve 20 is configured to communicate said control pressure to the outlet valve body 27 via said control pressure channel 21. The mutual relationship between the pressurized areas of the outlet valve body 27 secure correct function.

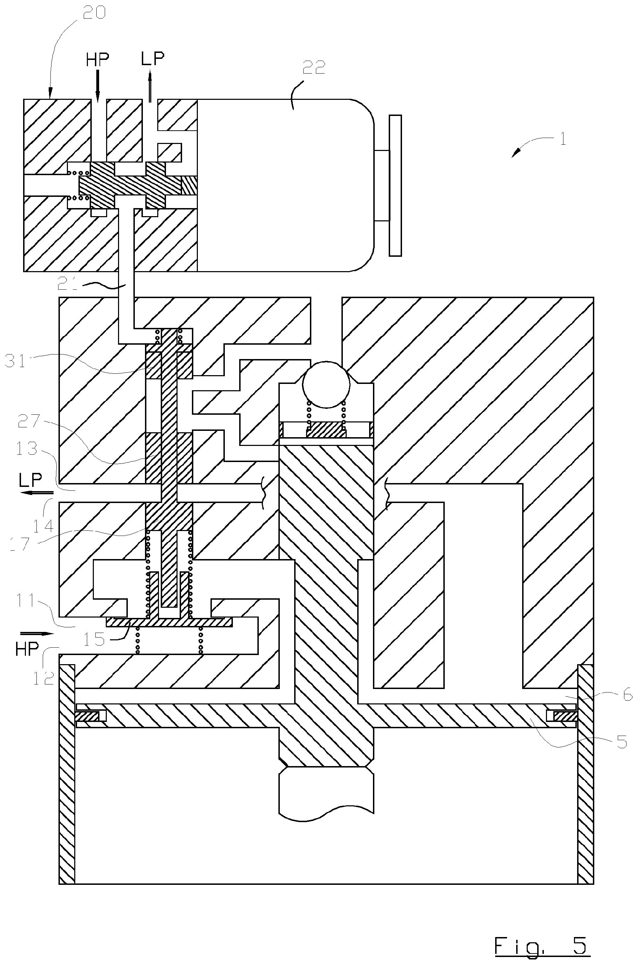

Reference is now made to figure 5 disclosing a second, most preferred, embodiment of the inventive actuator 1. Only differences in relation to the other embodiments will be described. In the forth embodiment the outlet valve body 27 as well as the hydraulic valve body 31 are connected to and jointly displaceable with the slave piston 17. This embodiment comprises the least number of movable parts.

Herein below the function of the actuator 1 will be described, independently of embodiment if nothing else is mentioned.

In the starting position, the actuator 1 is in its inactive state (see for instance figure 1), i.e. the pilot valve 20 is in inactive state and the solenoid 22 is inactivated, and low fluid pressure has effect in the control pressure channel 21. The first inlet valve body 15 is in closed position, the actuator piston disc 5 is in the inactive position/upper dead centre and the second inlet valve body 9 is in open position, the outlet valve body 27 is either in open or closed position depending on the embodiment, and the hydraulic valve body 31 is open. (See for instance figure 1) Thus, the actuator consumes neither power nor pressure fluid in the inactive state.

When a change of state signal/instruction is given by the control unit that the actuator 1 shall perform a displacement of the object/engine valve, the solenoid 22 is activated and the pilot valve 20 change to active state (see figure 2). This leads to a high fluid pressure having effect in the control pressure channel 21, whereupon the slave piston 17 and the hydraulic valve body 31 are displaced towards their active positions, at the same time as the outlet valve body 27 is either displaced towards its active position or is secured in its active position depending on the embodiment. When the slave piston 17 has gained speed the slave piston 17 ram the inlet valve body 15, which quickly is displaced towards its active position and immediately opens the inlet channel 11.

When the inlet channel 11 is open the pressure fluid starts to flow into the first portion 6 of the cylinder volume from the pressure fluid source (HP) via the inlet channel 11, and pressure fluid having high pressure acts against the upper side of the actuator piston disc 5 and displaces the actuator piston in a downward direction. Liquid is sucked into the locking volume 29 past the non-return valve 30 when the actuator piston rod 8 is displaced downwards. The outlet valve body 27 is kept closed. When the actuator piston disc 5 has been displaced a predetermined distance the second inlet valve 9 cuts off the pressure fluid flow in the inlet channel 11, i.e. prevents a continued inflow of pressure fluid from the pressure fluid source (HP) to the first portion 6 of the cylinder volume. When the supply of pressure fluid from the pressure fluid source (HP) is cut off, the actuator piston disc 5 continues its displacement a distance during the expansion of the pressure fluid in the first portion 6 of the cylinder volume.

When actuator piston disc 5 has reached its active position/lower dead centre, the actuator piston disc 5 is locked (kept in place) as a result of the liquid in the locking volume 29 not being allowed to evacuate.

When the object/engine valve 2 shall start its return movement the solenoid 22 is deactivated, whereupon the pilot valve 20 takes its inactive state, and low fluid pressure has effect in the control pressure channel 21. The slave piston 17 is now allowed to be displaced to its inactive position, whereupon the first inlet valve body 15 closes the inlet channel 11 and contributes to return the slave piston 17, the hydraulic valve body 31 is opened to allow evacuation of liquid from the locking volume 29, the outlet valve body 27 opens the outlet channel 13, and the actuator piston disc 5 can be displaced upwards to the inactive position by means of the spring member.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equipment may be modified in all kinds of ways within the scope of the appended claims.

It shall also be pointed out that all information about/concerning terms such as above, below, upper, lower, etc., shall be understood/read with the equipment oriented in accordance with the figures, having the drawings oriented in such a way that the indexing can be read in a correct way. Thus, similar terms indicate only mutual relationships in the shown embodiments, which relationships can be changed if the equipment according to the invention is provided with another construction/design.

It shall be pointed out that even if it is not explicitly stated that a feature from a specific embodiment can be combined with the features in another embodiment, this shall be considered obvious when possible.

## Claims

1. Actuator for axial displacement of an object, the actuator comprises:
- an actuator piston disc (5),
- a cylinder volume, wherein the actuator piston disc (5) separates said cylinder volume in a first portion (6) and a second portion (7) and is in axial direction displaceable back and forth in said cylinder volume between an inactive position and an active position,
- an inlet channel (11) extending between a pressure fluid inlet (12) and the first portion (6) of the cylinder volume,
- a first inlet valve body (15) arranged in said inlet channel (11),
- an outlet channel (13) extending between the first portion (6) of the cylinder volume and a pressure fluid outlet (14), and
- an outlet valve body (27) arranged in said outlet channel (13),
**characterized in that** the actuator (1) comprises a slave piston (17) that is displaceable back and forth in a bore (18) between an inactive position and an active position, and **in that** the first inlet valve body (15) is constituted by a seat valve body having an inactive position at which the inlet channel (11) is closed, the slave piston (17) being configured to during its movement from the inactive position to the active position ram said first inlet valve body (15) and displace it to an active position at which the inlet channel (11) is open, the outlet valve body (27) being connected to and jointly displaceable with the slave piston (17).

2. The actuator according to claim 1, wherein the actuator (1) comprises a second inlet valve body (9) arranged in said inlet channel (11), the second inlet valve body (9) being rigidly connected to the actuator piston disc (5) and jointly displaceable with the actuator piston disc (5) between an inactive position and an active position.

3. The actuator according to claim 2, wherein an actuator piston rod (8) is rigidly connected to and axially extending form the actuator piston disc (5), and together with the actuator piston disc (5) form an actuator piston, said second inlet valve body (9) constituting part of said actuator piston rod (8).

4. The actuator according to claim 2 or 3, wherein the second inlet valve body (9) is configured to admit fluid flow in the inlet channel (11) when the second inlet valve body (9) is located in the inactive position.

5. The actuator according to claim 4, wherein the second inlet valve body (9) is configured to prevent fluid flow in the inlet channel (11) when the second inlet valve body (9) is located at least a predetermined distance from its inactive position.

6. The actuator according to any of claims 2-5, wherein the first inlet valve body (15) and the second inlet valve body (9) are arranged in series with each other in said inlet channel (11) .

7. The actuator according to claim 6, wherein the second inlet valve body (9) is arranged between the first inlet valve body (15) and the first portion (6) of the cylinder volume.

8. The actuator according to any preceding claim, wherein the pressure fluid inlet (12) is configured to be connected to a pressure fluid source (HP), and wherein the pressure fluid outlet (14) is configured to be connected to a pressure fluid sink (LP).

9. The actuator according to any preceding claim, wherein the actuator comprises an electrically controlled pilot valve (20) configured to communicate a control pressure to the slave piston (17) via a control pressure channel (21), the pilot valve (20) being configured to place itself in a resting state, in which the control pressure channel (21) is in fluid communication with a control fluid outlet (23) of the pilot valve (20), and in an active state, in which the control pressure channel (21) is in fluid communication with the control fluid inlet (24), respectively.

10. The actuator according to claim 9, wherein the control fluid inlet (24) of the pilot valve (20) is configured to be connected to a pressure fluid source (HP), and wherein the pressure fluid outlet (23) of the pilot valve (20) is configured to be connected to a pressure fluid sink (LP).

11. The actuator according to claim 9 or 10, wherein the pilot valve (20) comprises a pilot valve body arrangement (25), which is displaceable back and forth between an inactive position and an active position, the pilot valve body arrangement (25) being biased by means of a spring (26) in the direction towards its inactive position.

12. The actuator according to claim 9 or 10, wherein the pilot valve (20) comprises a solenoid (22), which is configured to displace the pilot valve body arrangement (25) in a direction toward its active position upon activation of said solenoid (22) .

13. The actuator according to any of claims 9-12, wherein the pilot valve (20) is configured to communicate said control pressure to the outlet valve body (27) via said control pressure channel (21).

14. The actuator according to claim 3, wherein the actuator comprises a hydraulic circuit, which comprises a locking volume (29), a non-return valve (30) and a hydraulic valve, wherein the actuator piston rod (8) is arranged to be displaced in the axial direction relative to said locking volume (29) in connection with axial displacement of the actuator piston disc (5) in the cylinder volume.

15. The actuator according to claim 14, wherein the hydraulic valve comprises a hydraulic valve body (31) which is displaceable back and forth between an inactive position, in which the locking volume (29) is open, and an active position, in which the locking volume (29) is closed.

16. The actuator according to claim 15, wherein the hydraulic valve body (31) and the outlet valve body (27) are connected to and jointly displaceable with the slave piston (17).

## Patentansprüche

1. Stellantrieb zur axialen Verschiebung eines Objekts, wobei der Stellantrieb Folgendes umfasst:
- eine Stellantriebs-Kolbenscheibe (5),
- ein Zylindervolumen, wobei die Stellantriebs-Kolbenscheibe (5) das Zylindervolumen in einen ersten Teil (6) und einen zweiten Teil (7) trennt und in Axialrichtung in dem Zylindervolumen zwischen einer inaktiven Stellung und einer aktiven Stellung hin- und herschiebbar ist,
- einen Einlasskanal (11), der zwischen einem Druckfluideinlass
(12) und dem ersten Teil (6) des Zylindervolumens verläuft,
- einen ersten Einlassventilkörper (15), der in dem Einlasskanal (11) angeordnet ist,
- einen Auslasskanal (13), der zwischen dem ersten Teil (6) des Zylindervolumens und einem Druckfluidauslass (14) verläuft, und
- einen Auslassventilkörper (27), der in dem Auslasskanal (13) angeordnet ist,
**dadurch gekennzeichnet, dass** der Stellantrieb (1) einen Nebenkolben (17) aufweist, der in einer Bohrung (18) zwischen einer inaktiven Stellung und einer aktiven Stellung hin- und herschiebbar ist, und dass der erste Einlassventilkörper (15) durch einen Sitzventilkörper mit einer inaktiven Stellung, in der der Einlasskanal (11) geschlossen ist, gebildet wird, wobei der Nebenkolben (17) so ausgelegt ist, dass er bei seiner Bewegung von der inaktiven Stellung zur aktiven Stellung den ersten Einlassventilkörper (15) rammt und ihn in eine aktive Stellung verschiebt, in der der Einlasskanal (11) offen ist, wobei der Auslassventilkörper (27) mit dem Nebenkolben (17) verbunden und gemeinsam mit ihm verschiebbar ist.

2. Stellantrieb nach Anspruch 1, wobei der Stellantrieb (1) einen zweiten Einlassventilkörper (9) aufweist, der in dem Einlasskanal (11) angeordnet ist, wobei der zweite Einlassventilkörper (9) starr mit der Stellantriebs-Kolbenscheibe (5) verbunden und gemeinsam mit der Stellantriebs-Kolbenscheibe (5) zwischen einer inaktiven Stellung und einer aktiven Stellung verschiebbar ist.

3. Stellantrieb nach Anspruch 2, wobei die Stellantriebs-Kolbenstange (8) starr mit der Stellantriebs-Kolbenscheibe (5) verbunden ist und sich axial von ihr erstreckt und gemeinsam mit der Stellantriebs-Kolbenscheibe (5) einen Stellantriebskolben bildet, wobei der zweite Einlassventilkörper (9) einen Bestandteil der Stellantriebs-Kolbenstange (8) bildet.

4. Stellantrieb nach Anspruch 2 oder 3, wobei der zweite Einlassventilkörper (9) so ausgelegt ist, dass er einen Fluidstrom in den Einlasskanal (11) zulässt, wenn sich der zweite Einlassventilkörper (9) in der inaktiven Stellung befindet.

5. Stellantrieb nach Anspruch 4, wobei der zweite Einlassventilkörper (9) so ausgelegt ist, dass er einen Fluidstrom in den Einlasskanal (11) verhindert, wenn der zweite Einlassventilkörper (9) sich mindestens in einem vorbestimmten Abstand zu seiner inaktiven Stellung befindet.

6. Stellantrieb nach einem der Ansprüche 2-5, wobei der erste Einlassventilkörper (15) und der zweite Einlassventilkörper (9) in Serie in dem Einlasskanal (11) angeordnet sind.

7. Stellantrieb nach Anspruch 6, wobei der zweite Einlassventilkörper (9) zwischen dem ersten Einlassventilkörper (15) und dem ersten Teil (6) des Zylindervolumens angeordnet ist.

8. Stellantrieb nach einem der vorstehenden Ansprüche, wobei der Druckfluideinlass (12) für den Anschluss an eine Druckfluidquelle (HP) ausgelegt ist und wobei der Druckfluidauslass (14) für den Anschluss an eine Druckfluidsenke (LP) ausgelegt ist.

9. Stellantrieb nach einem der vorstehenden Ansprüche, wobei der Stellantrieb ein elektrisch gesteuertes Pilotventil (20) aufweist, das zur Übertragung eines Steuerdrucks über einen Steuerdruckkanal (21) auf den Nebenkolben (17) ausgelegt ist, wobei das Pilotventil (20) so ausgelegt ist, dass es sich in einen Ruhezustand versetzt, in dem sich der Steuerdruckkanal (21) in Fluidverbindung mit einem Steuerfluidauslass (23) des Pilotventils (20) befindet, bzw. sich in einen aktiven Zustand versetzt, in dem sich der Steuerdruckkanal (21) in Fluidverbindung mit dem Steuerfluideinlass (24) befindet.

10. Stellantrieb nach Anspruch 9, wobei der Druckfluideinlass (24) des Pilotventils (20) für den Anschluss an eine Druckfluidquelle (HP) ausgelegt ist und wobei der Druckfluidauslass (23) des Pilotventils (20) für den Anschluss an eine Druckfluidsenke (LP) ausgelegt ist.

11. Stellantrieb nach Anspruch 9 oder 10, wobei das Pilotventil (20) eine Pilotventilkörper-Anordnung (25) aufweist, die zwischen einer inaktiven Stellung und einer aktiven Stellung hin- und herschiebbar ist, wobei die Pilotventilkörper-Anordnung (25) mit einer Feder (26) zur inaktiven Stellung hin vorgespannt ist.

12. Stellantrieb nach Anspruch 9 oder 10, wobei das Pilotventil (20) ein Solenoid (22) aufweist, das zum Verschieben der Pilotventilkörper-Anordnung (25) in eine Richtung zu deren aktiver Stellung hin ausgelegt ist, wenn das Solenoid (22) aktiviert wird.

13. Stellantrieb nach einem der Ansprüche 9-12, wobei das Pilotventil (20) zum Übertragen des Steuerdrucks über den Steuerdruckkanal (21) auf den Auslassventilkörper (27) ausgelegt ist.

14. Stellantrieb nach Anspruch 3, wobei der Stellantrieb einen Hydraulikkreis aufweist, der ein Sperrvolumen (29), ein Rückschlagventil (30) und ein Hydraulikventil aufweist, wobei die Stellantriebs-Kolbenstange (8) so angeordnet ist, dass sie in Verbindung mit der axialen Verschiebung der Stellantriebs-Kolbenscheibe (5) in dem Zylindervolumen axial zu dem Sperrvolumen (29) verschoben wird.

15. Stellantrieb nach Anspruch 14, wobei das Hydraulikventil einen Hydraulikventilkörper (31) aufweist, der zwischen einer inaktiven Stellung, in der das Sperrvolumen (29) offen ist, und einer aktiven Stellung, in der das Sperrvolumen (29) geschlossen ist, hin- und herschiebbar ist.

16. Stellantrieb nach Anspruch 15, wobei der Hydraulikventilkörper (31) und der Auslassventilkörper (27) mit dem Nebenkolben (17) verbunden und gemeinsam mit diesem verschiebbar sind.

## Revendications

1. Actionneur pour le déplacement axial d'un objet, l'actionneur comprend :
- un disque de piston d'actionneur (5),
- un volume de cylindre, dans lequel le disque de piston d'actionneur (5) sépare ledit volume de cylindre en une première partie (6) et une deuxième partie (7) et peut être déplacé en va-et-vient dans la direction axiale dans ledit volume de cylindre entre une position inactive et une position active,
- un canal d'entrée (11) s'étendant entre une entrée de fluide sous pression (12) et la première partie (6) du volume de cylindre,
- un premier corps de soupape d'admission (15) agencé dans ledit canal d'entrée (11),
- un canal de sortie (13) s'étendant entre la première partie (6) du volume de cylindre et une sortie de fluide sous pression (14), et
- un corps de soupape d'évacuation (27) agencé dans ledit canal de sortie (13),
**caractérisé en ce que** l'actionneur (1) comprend un piston esclave (17) qui peut être déplacé en va-et-vient dans un alésage (18) entre une position inactive et une position active, et **en ce que** le premier corps de soupape d'admission (15) est constitué par un corps de siège de soupape ayant une position inactive dans laquelle le canal d'entrée (11) est fermé, le piston esclave (17) étant configuré, pendant son mouvement de la position inactive à la position active, de façon à pousser ledit premier corps de soupape d'admission (15) et à le déplacer vers une position active dans laquelle le canal d'entrée (11) est ouvert, le corps de soupape d'évacuation (27) étant relié au piston esclave (17) et pouvant être déplacé conjointement avec celui-ci.

2. Actionneur selon la revendication 1, dans lequel l'actionneur (1) comprend un deuxième corps de soupape d'admission (9) agencé dans ledit canal d'entrée (11), le deuxième corps de soupape d'admission (9) étant relié de manière rigide au disque de piston d'actionneur (5) et pouvant être déplacé conjointement avec le disque de piston d'actionneur (5) entre une position inactive et une position active.

3. Actionneur selon la revendication 2, dans lequel une tige de piston d'actionneur (8) est reliée de manière rigide au disque de piston d'actionneur (5) et s'étend axialement depuis celui-ci et, conjointement avec le disque de piston d'actionneur (5), forme un piston d'actionneur, ledit deuxième corps de soupape d'admission (9) constituant une partie de ladite tige de piston d'actionneur (8).

4. Actionneur selon la revendication 2 ou 3, dans lequel le deuxième corps de soupape d'admission (9) est configuré pour laisser passer un écoulement de fluide dans le canal d'entrée (11) lorsque le deuxième corps de soupape d'admission (9) se trouve dans la position inactive.

5. Actionneur selon la revendication 4, dans lequel le deuxième corps de soupape d'admission (9) est configuré pour empêcher un écoulement de fluide dans le canal d'entrée (11) lorsque le deuxième corps de soupape d'admission (9) se trouve au moins à une distance prédéterminée de sa position inactive.

6. Actionneur selon l'une quelconque des revendications 2 à 5, dans lequel le premier corps de soupape d'admission (15) et le deuxième corps de soupape d'admission (9) sont agencés en série l'un avec l'autre dans ledit canal d'entrée (11).

7. Actionneur selon la revendication 6, dans lequel le deuxième corps de soupape d'admission (9) est agencé entre le premier corps de soupape d'admission (15) et la première partie (6) du volume de cylindre.

8. Actionneur selon une quelconque revendication précédente, dans lequel l'entrée de fluide sous pression (12) est configurée pour être reliée à une source de fluide sous pression (HP), et dans lequel la sortie de fluide sous pression (14) est configurée pour être reliée à un puits de fluide sous pression (LP).

9. Actionneur selon une quelconque revendication précédente, dans lequel l'actionneur comprend une soupape pilote commandée électriquement (20) configurée pour communiquer une pression de commande au piston esclave (17) via un canal de pression de commande (21), la soupape pilote (20) étant configurée pour se placer dans un état de repos, dans lequel le canal de pression de commande (21) est en communication fluidique avec une sortie de fluide de commande (23) de la soupape pilote (20), et dans un état actif, dans lequel le canal de pression de commande (21) est en communication fluidique avec l'entrée de fluide de commande (24), respectivement.

10. Actionneur selon la revendication 9, dans lequel l'entrée de fluide de commande (24) de la soupape pilote (20) est configurée pour être reliée à une source de fluide sous pression (HP), et dans lequel la sortie de fluide sous pression (23) de la soupape pilote (20) est configurée pour être reliée à un puits de fluide sous pression (LP).

11. Actionneur selon la revendication 9 ou 10, dans lequel la soupape pilote (20) comprend un agencement de corps de soupape pilote (25), qui peut être déplacé en va-et-vient entre une position inactive et une position active, l'agencement de corps de soupape pilote (25) étant sollicité au moyen d'un ressort (26) dans la direction vers sa position inactive.

12. Actionneur selon la revendication 9 ou 10, dans lequel la soupape pilote (20) comprend un solénoïde (22), qui est configuré pour déplacer l'agencement de corps de soupape pilote (25) dans une direction vers sa position active lors de l'activation dudit solénoïde (22).

13. Actionneur selon l'une quelconque des revendications 9 à 12, dans lequel la soupape pilote (20) est configurée pour communiquer ladite pression de commande au corps de soupape d'évacuation (27) via ledit canal de pression de commande (21).

14. Actionneur selon la revendication 3, dans lequel l'actionneur comprend un circuit hydraulique, qui comprend un volume de verrouillage (29), un clapet antiretour (30) et une soupape hydraulique, dans lequel la tige de piston d'actionneur (8) est agencée de façon à être déplacée dans la direction axiale par rapport audit volume de verrouillage (29) en relation avec un déplacement axial du disque de piston d'actionneur (5) dans le volume de cylindre.

15. Actionneur selon la revendication 14, dans lequel la soupape hydraulique comprend un corps de soupape hydraulique (31) qui peut être déplacé en va-et-vient entre une position inactive, dans laquelle le volume de verrouillage (29) est ouvert, et une position active, dans laquelle le volume de verrouillage (29) est fermé.

16. Actionneur selon la revendication 15, dans lequel le corps de soupape hydraulique (31) et le corps de soupape d'évacuation (27) sont reliés au piston esclave (17) et peuvent être déplacés conjointement avec celui-ci.
